# FASCICULE DE BREVET EUROPEEN

(11) **EP 3 493 373 B1**
(45) Date de publication et mention de la délivrance du brevet: **18.10.2023**
(21) Numéro de dépôt: 18206368.5
(22) Date de dépôt: 15.11.2018
(51) Int. Cl.: H02K 1/2733, H02K 7/14, F02B 39/10, F04D 25/06

(54) **DISPOSITIF DE COMPRESSION D'UN FLUIDE ENTRAINE PAR UNE MACHINE ELECTRIQUE AVEC UN ARBRE DE ROTOR AYANT UNE FRETTE AMAGNETIQUE**
FLÜSSIGKEITSKOMPRESSIONSVORRICHTUNG, DIE VON EINER ELEKTRISCHEN MASCHINE MIT EINER ROTORWELLE ANGETRIEBEN WIRD, DIE EINEN NICHT-MAGNETISCHEN SCHRUMPFRING UMFASST
DEVICE FOR COMPRESSING A FLUID DRIVEN BY AN ELECTRIC MACHINE WITH A ROTOR SHAFT HAVING A NON-MAGNETIC RING

(30) Priorité: 04.12.2017 FR 1761576
(43) Date de publication de la demande: 05.06.2019
(73) Titulaire: IFP Energies nouvelles, 92852 Rueil-Malmaison Cedex (FR)
(72) Inventeur: MILOSAVLJEVIC, Misa, 95610 ERAGNY SUR OISE (FR); VALIN, Thomas, 92500 RUEIL-MALMAISON (FR); LE BERR, Fabrice, 92500 RUEIL MALMAISON (FR); VENTURI, Stephane, 7100 ROIFFIEUX (FR); GAUSSENS, Benjamin, 78530 BUC (FR); BOISSON, Julien, 92500 RUEIL-MALMAISON (FR); ABDELLI, Abdenour, 78380 BOUGIVAL (FR); FAVRE, Luca, 11010 VALPELLINE (AO) (IT)
(74) Mandataire: IFP Energies nouvelles

(56) Documents cités:
- EP-A1- 2 031 732
- EP-A2- 1 635 441
- WO-A1-93/08632
- WO-A1-2007/072536
- DE-A1- 2 331 416
- DE-B3-102011 079 224
- FR-A1- 2 768 271
- FR-A1- 2 798 169
- FR-B1- 2 798 169
- US-A- 3 700 372

## Description

La présente invention concerne le domaine des dispositifs de compression entraînés par une machine électrique, en particulier l'invention concerne un turbocompresseur entraîné par une machine électrique.

Elle concerne notamment un dispositif pour comprimer un fluide gazeux, ici de l'air, par un compresseur, seul ou associé à une turbine pour former un turbocompresseur, pour ensuite l'envoyer vers tous appareils et plus particulièrement à l'admission d'un moteur à combustion interne.

En effet, comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion lors d'un besoin d'une forte puissance. Cette opération, appelée suralimentation, peut être réalisée par tous moyens, tel qu'un compresseur seul entraîné électriquement par une machine électrique (compresseur électrifié), ou par un compresseur associé à une turbine et à une machine électrique pour former un turbocompresseur électrifié.

Dans les deux cas précités, la machine électrique associée au compresseur peut être de deux types.

L'un de ces types est une machine électrique à faible entrefer et bobinages proches du rotor qui permet un guidage optimal du flux magnétique et un rendement optimisé. Ce type de machine électrique présente l'avantage d'une certaine compacité, qui peut parfois devenir problématique pour son refroidissement et qui demande l'utilisation d'un système spécifique pour évacuer ses pertes.

Afin de ne pas être intrusif sur l'entrée d'air du compresseur, ce type de machine électrique est classiquement positionnée au dos du compresseur dans le cas d'un compresseur électrifié, ou entre le compresseur et la turbine dans le cas d'un turbocompresseur électrifié, et cela malgré la présence d'un environnement thermique défavorable dans ce dernier car proche de la turbine. Généralement, la liaison entre le compresseur, la turbine et la machine électrique est rigide. Ce type de machine peut aussi être positionné côté compresseur mais à une distance relativement éloignée de l'entrée d'air afin de ne pas perturber cette dernière. La liaison entre le compresseur et la machine est alors rigide ou réalisée à l'aide d'un accouplement mécanique ou magnétique.

Ce type de systèmes est mieux décrit dans les brevets US 2014/0373532, US 8,157,543, US 8,882,478, US 2010/0247342, US 6,449,950, US 7,360,361, EP 0 874 953 ou EP 0 912 821.

On connaît également les documents WO2007/072546 et FR2 768 271 A1 concernant des turbines à gaz avec un dipositif de compression et une machine électrique.

L'autre de ces types est une machine électrique à fort entrefer (appelée machine à « Air Gap »), dont l'entrefer peut parfois mesurer plusieurs centimètres afin de laisser passer le fluide de travail dans cet entrefer permettant ainsi une intégration au plus proche des systèmes de compression, dans un environnement thermique nettement plus favorable.

Cette disposition de machine électrique présente néanmoins le désavantage de perturber et limiter le passage du flux magnétique entre le rotor et le stator au travers du grand entrefer, ce qui contribue à limiter le rendement intrinsèque de la machine électrique ainsi que ses performances spécifiques (puissance massique et volumique). Les pertes élevées sur ce type de concept obligent aussi à développer un refroidissement spécifique pour évacuer les calories du rotor et du stator ou à limiter les performances spécifiques.

Ce type de machine électrique est notamment décrit dans les brevets EP 1 995 429, US 2013/169074 ou US 2013/043745.

Une des problématiques de l'électrification des compresseurs concerne la conception du rotor et sa connexion à l'arbre du compresseur. Cette conception est souvent complexe (utilisation de vis), et ne permet pas une bonne coaxialité du rotor et de l'arbre du compresseur (notamment en raison d'un centrage court) limitant ainsi la vitesse maximale atteignable par le système complet.

Pour pallier ces inconvénients, la présente invention concerne un dispositif de compression entraîné par une machine électrique, pour laquelle le rotor comprend un arbre de rotor, un aimant cylindrique et une frette amagnétique. Selon l'invention, l'arbre de rotor comporte un alésage pour l'insertion d'une extrémité de l'arbre de compresseur. Ainsi, la conception du rotor est simple, et sa connexion avec l'arbre de compression facilement mise en oeuvre.

### Le dispositif selon l'invention

La présente invention concerne un dispositif de compression d'un fluide entraîné par une machine électrique, ladite machine électrique comprenant un rotor et un stator, et ledit dispositif de compression comprenant un arbre de compression sur lequel est montée au moins une roue de compression, ledit rotor étant fixé avec ledit arbre de compression. Ledit rotor comprend un arbre de rotor, un aimant cylindrique monté sur au moins une partie dudit arbre de rotor, une frette en matériau amagnétique pour retenir ledit aimant sur ledit arbre de rotor, et ledit arbre de rotor comporte un alésage pour l'insertion d'une extrémité dudit arbre de compression.

Selon un mode de réalisation, ledit rotor a un diamètre extérieur inférieur ou égal au diamètre de l'entrée de ladite roue de compression.

Selon l'invention, ledit rotor comporte au moins une butée amagnétique sur un côté dudit aimant.

Selon un aspect, ladite frette est réalisée en titane ou en carbone.

Conformément à une mise en oeuvre, ledit rotor comporte une portion de diamètre réduit par rapport à l'extrémité destinée à la fixation avec ledit arbre de compression, et dans lequel ledit aimant est monté sur ladite portion de diamètre réduit.

Selon une caractéristique, ledit rotor comporte une surface plane en contact avec une surface plane extrémale de ladite roue de compression.

Conformément à un mode de réalisation, ledit rotor comporte une portion cylindrique insérée dans ladite roue de compression.

De manière avantageuse, ladite portion cylindrique dudit rotor a une longueur axiale sensiblement égale à 1.5 fois au moins le diamètre de l'arbre de compression.

Alternativement, ledit dispositif de compression comprend un manchon tubulaire monté sur ledit arbre de compression et disposé entre une extrémité de ladite roue de compression et ladite portion cylindrique dudit rotor.

Selon un aspect, ledit rotor est fixé avec ledit arbre de compression au moyen d'un filetage.

De préférence, ledit rotor comporte un embout de manipulation pour déplacer ledit rotor.

De manière avantageuse, ledit embout de manipulation est démontable.

Préférentiellement, ledit dispositif de compression est un turbocompresseur associant turbine et compresseur, notamment pour un moteur à combustion interne d'un véhicule, ou une microturbine.

Avantageusement, ladite machine électrique est agencée dans l'admission du gaz dudit turbocompresseur.

Selon un aspect, ladite machine électrique est une machine à grille statorique.

En outre, l'invention concerne un procédé de fabrication d'un dispositif de compression entraîné par une machine électrique, ladite machine électrique comprenant un rotor et un stator, et ledit dispositif de compression comprenant un arbre de compression et une roue de compression. Pour ce procédé, on met en oeuvre les étapes suivantes :
a) on monte ladite roue de compression sur ledit arbre de compression ;
b) on monte un aimant cylindrique sur au moins une partie d'un arbre de rotor ;
c) on retient ledit aimant cylindrique sur ledit arbre de rotor au moyen d'une frette amagnétique ; et
d) on insère une extrémité dudit arbre de compression dans un alésage dudit arbre de rotor, et on fixe ledit arbre de compression avec ledit arbre de rotor.

Selon un mode de réalisation, lors de l'étape d'insertion de l'arbre de compression dans ledit alésage dudit arbre de rotor, ledit rotor vient en butée sur ladite roue de compression au moyen de surfaces planes en contact.

Conformément à une mise en oeuvre, lors de l'étape d'insertion de l'arbre de compression dans ledit alésage dudit arbre de rotor, une portion cylindrique dudit rotor est insérée dans ladite roue de compression.

Selon l'invention, on fixe l'arbre de rotor avec ledit arbre de compression par filetage.

Selon l'invention, on fait tourner ledit rotor au moyen d'un embout de manipulation.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 illustre un rotor de machine électrique selon un mode de réalisation de l'invention.
La figure 2 illustre un dispositif de compression entraîné par une machine électrique selon un premier mode de réalisation de l'invention.
La figure 3 illustre un dispositif de compression entraîné par une machine électrique selon un deuxième mode de réalisation de l'invention.
La figure 4 illustre un dispositif de compression entraîné par une machine électrique selon un troisième mode de réalisation de l'invention.

### Description détaillée de l'invention

La présente invention concerne un dispositif de compression d'un fluide, notamment d'un gaz, entraîné par une machine électrique. En d'autres termes, l'invention concerne l'ensemble formé par la machine électrique et le dispositif de compression. De préférence, le dispositif de compression est prévu pour comprimer de l'air.

Le dispositif de compression d'un fluide comprend un arbre, dit arbre de compression, sur lequel est montée une roue de compression (également appelée aube).

La machine électrique comprend un rotor et un stator. Le rotor est fixé avec l'arbre de compression, afin de transmettre ou de prélever le couple de la machine électrique à l'arbre de compression et à la roue de compression et inversement.

Selon l'invention, le rotor comporte :
- un arbre de rotor, l'arbre de rotor est destiné à être fixé avec l'arbre de compression et a pour vocation de soutenir les parties actives du rotor de la machine électrique, en garantissant la coaxialité entre ces différentes éléments tournants,
- un aimant cylindrique, monté sur au moins une partie de l'arbre de rotor, de préférence, l'aimant cylindrique est monté sur une extrémité de l'arbre de rotor qui est opposée à l'extrémité de l'arbre de rotor par laquelle le rotor est fixé à l'arbre de compression, l'aimant interagit avec des bobines du stator de manière à créer le mouvement de rotation du rotor.
- une frette en matériau amagnétique pour comprimer l'aimant et retenir axialement l'aimant sur l'arbre de rotor, la frette peut avoir une forme sensiblement cylindrique enveloppant l'aimant cylindrique et au moins une partie de l'arbre de rotor. De plus le matériau amagnétique permet d'éviter les fuites magnétiques.

De plus, l'arbre de rotor, comporte à une extrémité un alésage pour l'insertion d'une extrémité de l'arbre de compression. Cet alésage est de préférence selon l'axe de l'arbre de rotor, de manière à permettre un bon alignement des deux arbres (de rotor et de compression).

Selon l'invention, le rotor comporte en outre une butée amagnétique sur au moins un côté de l'aimant. Cette butée amagnétique permet d'éviter les fuites magnétiques de l'aimant vers l'arbre de rotor. La butée amagnétique peut aussi jouer le rôle de barrière thermique pour protéger l'aimant sensible à la température. Cette butée amagnétique prend la forme d'un anneau inséré entre un épaulement de l'arbre de rotor et l'aimant cylindrique.

Selon un aspect de l'invention, le rotor est fixé avec l'arbre de compression au moyen d'un filetage. Pour cela, un filetage peut être prévu sur l'extrémité de l'arbre de compression, et un taraudage peut être prévu à l'intérieur de l'alésage de l'arbre de rotor. Cette fixation par filetage est simple à mettre en oeuvre, et permet une liaison rigide de l'arbre de rotor avec l'arbre de compression.

Pour ce mode de réalisation par filetage, le rotor comporte un embout de manipulation destiné à faciliter le « vissage » de l'arbre de compression dans le rotor. Selon un exemple de réalisation, l'embout de manipulation peut avoir une emprunte à douze pans ou tout autre système minimisant l'inertie et l'impact aérodynamique sur la veine fluide, pour faciliter l'assemblage. De manière avantageuse, l'embout de manipulation peut être démontable, notamment au moyen d'un assemblage vissé. Le caractère démontable de l'embout de manipulation permet de réaliser un rotor de diamètre extérieur constant, une fois que le rotor est fixé à l'arbre de compression, et de minimiser la masse du rotor en fonctionnement.

Alternativement, dans des exemples non conformes à l'invention, la fixation de l'arbre de rotor avec l'arbre de compression peut être réalisée par tout autre moyen. Par exemple, cette fixation peut être réalisée au moyen de goupilles et de vis.

Conformément à une caractéristique de l'invention, la frette peut être réalisée en titane ou en carbone, ou tout autre matériau aux propriétés mécaniques adéquates et amagnétique.

Selon un aspect, l'arbre de rotor peut être réalisé en matériau magnétique, par exemple en AISI420 ou APX4.

De préférence, la machine électrique peut être montée du côté de l'admission du dispositif de compression.

Selon un mode de réalisation de l'invention, le rotor (en l'occurrence la frette) a un diamètre extérieur inférieur ou égal au diamètre de l'entrée de la roue de compression. De cette manière le flux de gaz en entrée du dispositif de compression n'est pas entravé par l'arbre de rotor.

Conformément à une mise en oeuvre de l'invention, l'arbre de rotor peut comporter une portion ayant un diamètre réduit par rapport à l'extrémité de l'arbre de rotor destinée à la fixation avec l'arbre de compression. Dans ce cas, l'aimant peut être monté sur cette portion à diamètre réduit. Avantageusement, la frette a un diamètre extérieur qui correspond au diamètre du système de compression en entrée de ce dernier. Ainsi, le diamètre du rotor est de diamètre limité et lisse (de diamètre extérieur constant), ce qui permet que le flux d'air en entrée du dispositif de compression est entravé le moins possible par le rotor (continuité du diamètre entre le rotor et l'entrée du système de compression).

Afin de favoriser le montage et le positionnement des pièces, le rotor peut comporter une surface plane qui est en contact avec une surface plane extrémale de la roue de compression. De plus, cette caractéristique permet d'agencer le rotor au plus près du dispositif de compression.

Selon un mode de réalisation de l'invention, le rotor peut comporter une portion cylindrique insérée dans la roue de compression. Cette portion cylindrique entoure l'arbre de compression et est insérée dans l'alésage de la roue de compression. Cette portion cylindrique assure un centrage long du rotor par rapport à l'arbre de compression, ce qui permet une meilleure coaxialité des deux arbres. La portion cylindrique peut avoir un diamètre extérieur réduit par rapport au diamètre extérieur du rotor.

Avantageusement, la portion cylindrique a une longueur axiale qui est supérieure ou égale à 1.5 fois le diamètre de l'arbre de compression au sein de la roue de compression, afin de permettre un centrage long optimisé.

Selon une première variante de ce mode de réalisation, la portion cylindrique a une longueur axiale qui correspond sensiblement à la longueur axiale de la roue de compression, afin de permettre un centrage long maximal et de rigidifier la roue de compression, en particulier pour les grandes vitesses de rotation. Cette configuration permet notamment de rigidifier la portion de l'arbre sous la roue compresseur qui peut être un point critique pour certains modes de flexion.

Selon une deuxième variante de ce mode de réalisation, un manchon tubulaire peut être monté sur l'arbre de compression et être inséré dans la roue de compression, de manière à venir en butée contre la portion cylindrique du rotor d'un côté, et sur la bague du dispositif de guidage de l'arbre de compression. De cette manière, la roue de compression repose sur le manchon tubulaire et sur la portion cylindrique, sans être en contact avec l'arbre de compression. Cette variante de réalisation permet un centrage long optimisé et une rigidification de la roue de compression, en particulier pour les grandes vitesses de rotation. Cette configuration permet notamment de rigidifier la portion de l'arbre sous la roue compresseur qui peut être un point critique pour certains modes de flexion. Cette solution permet également de limiter les contacts entre matériaux différents. Selon un exemple de réalisation, le manchon tubulaire peut comprendre une collerette pour augmenter la rigidification de la roue de compression.

Conformément à une mise en oeuvre de l'invention, le dispositif de compression est un turbocompresseur, notamment pour un moteur à combustion interne d'un véhicule. Il s'agit alors d'un turbocompresseur entraîné par une machine électrique. Dans ce cas, l'arbre de compression correspond à l'arbre du turbocompresseur qui lie la turbine du turbocompresseur au compresseur du turbocompresseur. Ainsi la machine électrique entraîne à la fois le compresseur et la turbine.

Selon une variante de cette mise en oeuvre de l'invention, la machine électrique peut être agencée dans l'admission du gaz (généralement de l'air) du système du turbocompresseur. Cette solution présente un avantage double : la machine électrique peut être refroidie par le flux de gaz d'admission, et le gaz d'admission est chauffé par la machine électrique, ce qui peut être favorable dans certains modes de fonctionnement du moteur à combustion interne.

De préférence, la machine électrique peut être une machine électrique à grille statorique, c'est-à-dire une machine électrique ayant un stator ayant des dents statoriques autour desquelles sont montées des bobines, ces dents statoriques étant de grandes dimensions pour permettre un passage du flux d'air. Une telle machine à grille statorique est décrite notamment dans les demandes de brevet WO2013/050577 et FR 3048022.

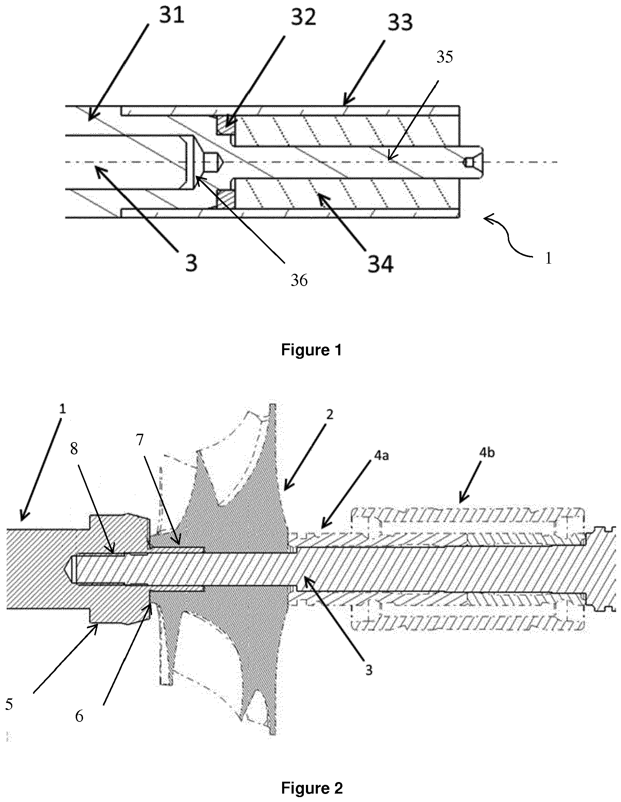

La figure 1 illustre, schématiquement et de manière non limitative, un mode de réalisation d'un rotor selon l'invention. Pour le mode de réalisation illustré, le rotor 1 comprend un arbre de rotor 31, un aimant cylindrique 34, une frette 33, et une butée amagnétique 32. L'arbre de rotor 31 comporte d'un côté un alésage 36 pour l'insertion de l'arbre de compresseur 3 (représenté partiellement). L'arbre de compresseur 3 peut comprendre un filetage (non représenté), et l'alésage 36 peut comprend un taraudage (non représenté) coopérant avec le filetage de l'arbre de compression 3. De l'autre côté, l'arbre de rotor 31 comporte une portion 35 de diamètre réduit par rapport au diamètre de l'arbre de rotor 31 du premier côté. L'aimant cylindrique 34 est monté sur cette portion 35 de diamètre réduit. L'aimant 34 vient en butée axialement contre une butée amagnétique 32. La butée amagnétique 32 a sensiblement une forme d'anneau. La butée amagnétique 32 est disposée dans un épaulement de l'arbre de rotor 31. Une frette amagnétique 33 (par exemple en carbone ou en titane) est placée autour de l'aimant 34. La frette amagnétique 33 comprime l'aimant 34 et maintient l'aimant 34 axialement en position sur l'arbre de rotor 31. La frette amagnétique 33 a un diamètre extérieur qui correspond au diamètre maximal de l'arbre de rotor 31. Le rotor 1 ainsi formé a une forme de cylindre « lisse » (de diamètre extérieur constant). Le rotor peut comprendre également un embout de manipulation qui est non représenté.

La figure 2 illustre, schématiquement et de manière non limitative, un dispositif de compression (en particulier un turbocompresseur) selon un premier mode de réalisation de l'invention. Sur cette figure, les différents composants du rotor 1, c'est-à-dire l'arbre du rotor, l'aimant, la frette et éventuellement la butée amagnétique, ne sont pas représentés. La partie turbine du turbocompresseur n'est pas représentée également. La figure 2 illustre un système d'assemblage du rotor électrique 1, sur l'arbre du turbocompresseur 3 tout en assurant une liaison rigide de l'ensemble et notamment de la roue compresseur 2. Dans ce cas, l'arbre du turbocompresseur 3, après le montage d'un roulement 4a, se voit positionner la roue compresseur 2 via un centrage (radialement) et jusqu'au contact de la bague intérieure du roulement 4a axialement.

L'alésage de la roue de compression 2 peut être élargi du côté opposé au roulement 4. Cette modification (par rapport à une roue de compression classique) est (avantageusement) réalisée sans nuire à la tenue mécanique de la roue compresseur 2.

L'alésage du rotor 1 de la machine électrique est pourvu d'un taraudage, dans lequel vient se visser l'arbre du turbocompresseur 3 à travers le filetage 8 de l'arbre du compression. La mise en position de ce rotor électrique 1 est réalisé via un centrage long en interaction avec l'arbre de compression 3, au moyen de la portion cylindrique 7 du rotor 1. Un jeu mécanique peut exister entre l'alésage de la roue compresseur 2 et le cylindre de centrage 7 de l'arbre du rotor 1 de la machine électrique. La portion cylindrique 7 représente environ à 1.5 fois le diamètre de l'arbre de compression. Celui-ci assure la coaxialité de l'arbre complet du turbocompresseur électrifié. Le positionnement axial du rotor électrique 1 est réalisé via une liaison appui-plan contre la surface plane 6 du nez (de l'entrée) de la roue compresseur 2. Un jeu mécanique peut être présent entre le fond d'alésage dans la roue compresseur 2 et le cylindre de centrage du rotor 1 de la machine électrique. La liaison rigide du rotor de la machine électrique 1 sur l'arbre du turbocompresseur 3 et la précharge axiale de la bague intérieure du roulement du turbocompresseur 4a est réalisée par serrage (frottement).

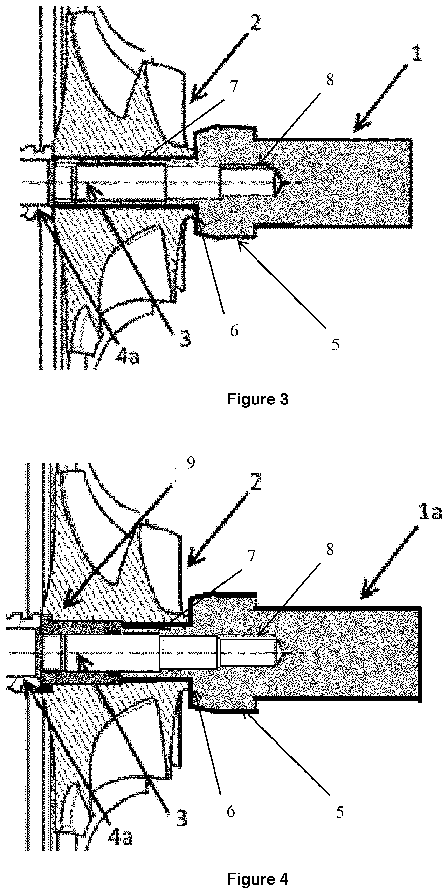

La figure 3 illustre, schématiquement et de manière non limitative, un dispositif de compression (en particulier un turbocompresseur) selon un deuxième mode de réalisation de l'invention. Sur cette figure, les différents composants du rotor 1, c'est-à-dire l'arbre du rotor, l'aimant, la frette et éventuellement la butée amagnétique, ne sont pas représentés. La partie turbine du turbocompresseur n'est pas représentée également. La figure 3 illustre un système d'assemblage du rotor électrique 1, sur l'arbre du turbocompresseur 3 tout en assurant l'immobilisation de l'ensemble et notamment de la roue compresseur 2. Les éléments identiques à la figure 2 ne seront pas décrits en détail. Le deuxième mode de réalisation de la figure 3 diffère du premier mode de réalisation de la figure 2 par le fait que la portion cylindrique 7 a une longueur sensiblement égale à la longueur axiale de la roue de compression 2, en préservant un jeu mécanique entre la bague intérieure du roulement 4a et son extrémité. Pour ce mode de réalisation, la roue de compression 2 comporte un alésage interne de diamètre plus élevé que la roue de compression 2 classique. De plus, la roue de compression 2 est montée directement sur la portion cylindrique 7 du rotor 1. L'emploi d'une telle structure de rotor 1 de machine électrique avec un matériau adéquat permet d'accroître la raideur de la portion de l'arbre du turbocompresseur 3 afin de rendre moins sensible la structure aux modes de flexion dangereux. Dans cette architecture, la roue de compression 2, généralement en aluminium, se trouve à l'interface entre le rotor de la machine électrique 1 et la bague intérieure du roulement 4a, le rotor 1 et la bague intérieure du roulement 4a étant réalisés en acier généralement.

La figure 4 illustre, schématiquement et de manière non limitative, un dispositif de compression (en particulier un turbocompresseur) selon un troisième mode de réalisation de l'invention. Sur cette figure, les différents composants du rotor 1, c'est-à-dire l'arbre du rotor, l'aimant, la frette et éventuellement la butée amagnétique, ne sont pas représentés. La partie turbine du turbocompresseur n'est pas représentée également. La figure 4 illustre un système d'assemblage du rotor électrique 1, sur l'arbre du turbocompresseur 3 tout en assurant l'immobilisation de l'ensemble et notamment de la roue compresseur 2. Les éléments identiques à la figure 2 ne seront pas décrits en détail. Le troisième mode de réalisation de la figure 4 diffère du premier mode de réalisation de la figure 2 par l'utilisation d'un manchon tubulaire 9 entre l'arbre de compression 3 et la roue de compression 2. Le manchon tubulaire vient en contact axialement avec le roulement 4a et avec la portion cylindrique 7 du rotor 1, éventuellement avec un jeu. Le manchon tubulaire 9 comporte une collerette à son extrémité en contact avec la bague de roulement 4. Pour ce mode de réalisation, la roue de compression 2 comporte un alésage interne de diamètre plus élevé que la roue de compression 2 classique.

En outre, l'invention concerne un procédé de fabrication d'un dispositif de compression entraîné par une machine électrique, ladite machine électrique comprenant un rotor et un stator, et ledit dispositif de compression comprenant un arbre de compression et une roue de compression. Pour ce procédé, on met en oeuvre les étapes suivantes :
a) on monte la roue de compression sur l' arbre de compression ;
b) on monte un aimant cylindrique sur au moins une partie d'un arbre de rotor ;
c) on retient ledit aimant cylindrique sur ledit arbre de rotor au moyen d'une frette amagnétique, la frette amagnétique comprimant l'aimant sur l'arbre du rotor, la frette amagnétique est sensiblement cylindrique ; et
d) on insère une extrémité de l'arbre de compression dans un alésage dudit arbre de rotor, et on fixe l'arbre de compression avec l'arbre de rotor.

Avantageusement, le procédé de fabrication est destiné à fabriquer un dispositif de compression selon une quelconque combinaison des variantes décrites précédemment. Par exemple, le procédé de fabrication peut être prévu pour fabriquer un dispositif de compression tel que décrit en référence à l'une des figures 1 à 4.

Selon un mode de réalisation, lors de l'étape d'insertion de l'arbre de compression dans l'alésage de l'arbre de rotor, le rotor peut venir en butée sur ladite roue de compression au moyen de surfaces planes en contact.

Conformément à une mise en oeuvre, lors de l'étape d'insertion de l'arbre de compression dans l'alésage de l'arbre de rotor, une portion cylindrique du rotor peut être insérée dans la roue de compression. Cette portion cylindrique assure un centrage long du rotor par rapport à l'arbre de compression, ce qui permet une bonne coaxialité des deux arbres.

Selon un aspect de l'invention, on peut fixer l'arbre de rotor avec l'arbre de compression par filetage. Pour cela, un filetage peut être prévu sur l'extrémité de l'arbre de compression et un taraudage peut être prévu à l'intérieur de l'alésage de l'arbre de rotor. Cette fixation par filetage est simple à mettre en oeuvre, et permet un maintien en position correct.

Pour ce mode de réalisation, on peut faire tourner le rotor au moyen d'un embout de manipulation, par exemple l'embout de manipulation comporte une emprunte à douze pans.

Alternativement, on peut fixer l'arbre de rotor avec l'arbre de compression par tout autre moyen connu, par exemple au moyen de goupilles et de vis.

Conformément à un mode de réalisation du procédé, l'ensemble dispositif de compression, ou éventuellement turbocompresseur, et machine électrique peut être installé dans une boucle d'air d'un moteur à combustion interne.

Avantageusement, on peut placer la machine électrique dans la conduite d'admission d'air, de sorte que le flux d'air qui entre dans le dispositif de compression traverse d'abord la machine électrique. Cette solution présente un avantage double : la machine électrique peut être refroidie par le flux de gaz d'admission, et le gaz d'admission est chauffé par la machine électrique, ce qui peut être favorable dans certains modes de fonctionnement du moteur à combustion interne.

Le procédé peut comporter en outre une étape d'installation du stator autour du rotor.

De manière avantageuse, le procédé de fabrication selon l'invention peut concerner l'électrification d'un dispositif de compression ou d'un turbocompresseur classique (équipé d'une roue de compression et d'un arbre de compression mais initialement sans entraînement électrique). Pour cela, la roue de compression et l'arbre de compression peuvent être une roue et un arbre de compression, pour lequel on réalise les étapes a) à d) décrites ci-dessus.

Dans ce cas, le procédé peut comporter une étape supplémentaire d'alésage de la roue de compression afin d'y insérer au moins la portion cylindrique du rotor, et éventuellement le manchon tubulaire.

En outre, l'invention est également adaptée pour les systèmes de production d'énergie tels que les microturbines.

## Revendications

1. Dispositif de compression d'un fluide entraîné par une machine électrique, ladite machine électrique comprenant un rotor (1) et un stator, et ledit dispositif de compression comprenant un arbre de compression (3) sur lequel est montée au moins une roue de compression (2), ledit rotor (1) étant fixé avec ledit arbre de compression (3), ledit rotor (1) comprenant un arbre de rotor (31), un aimant cylindrique (34) monté sur au moins une partie dudit arbre de rotor (31), une frette (33) en matériau amagnétique pour retenir ledit aimant (34) sur ledit arbre de rotor (31), ledit arbre de rotor (31) comportant un alésage (36) pour l'insertion d'une extrémité dudit arbre de compression (3), ledit rotor (1) comportant au moins une butée amagnétique (32) sur un côté dudit aimant (34), la butée amagnétique (32) prenant la forme d'un anneau inséré entre un épaulement de l'arbre de rotor (31) et l'aimant cylindrique (34), **caractérisé en ce que** ledit rotor (1) est fixé avec ledit arbre de compression (3) au moyen d'un filetage (8) et **en ce que** ledit rotor (1) comporte un embout de manipulation (5) pour déplacer ledit rotor (1).

2. Dispositif de compression selon la revendication 1, dans lequel ledit rotor (1) a un diamètre extérieur inférieur ou égal au diamètre de l'entrée de ladite roue de compression.

3. Dispositif de compression selon l'une des revendications précédentes, dans lequel ladite frette (33) est réalisée en titane ou en carbone.

4. Dispositif de compression selon l'une des revendications précédentes, dans lequel ledit rotor (1) comporte une portion de diamètre réduit (35) par rapport à l'extrémité destinée à la fixation avec ledit arbre de compression (3), et dans lequel ledit aimant (34) est monté sur ladite portion de diamètre réduit (35).

5. Dispositif de compression selon l'une des revendications précédentes, dans lequel ledit rotor (1) comporte une surface plane (6) en contact avec une surface plane extrémale de ladite roue de compression (2).

6. Dispositif de compression selon l'une des revendications précédentes, dans lequel ledit rotor (1) comporte une portion cylindrique (7) insérée dans ladite roue de compression (2).

7. Dispositif de compression selon la revendication 6, dans lequel ladite portion cylindrique (7) dudit rotor (1) a une longueur axiale sensiblement égale à 1.5 fois au moins le diamètre de l'arbre de compression (3).

8. Dispositif de compression selon la revendication 6, dans lequel ledit dispositif de compression comprend un manchon tubulaire (9) monté sur ledit arbre de compression (3) et disposé entre une extrémité de ladite roue de compression (2) et ladite portion cylindrique (7) dudit rotor (1).

9. Dispositif de compression selon l'une des revendications précédentes, dans lequel ledit embout de manipulation (5) est démontable.

10. Dispositif de compression selon l'une des revendications précédentes, dans lequel ledit dispositif de compression est un turbocompresseur associant turbine et compresseur, notamment pour un moteur à combustion interne d'un véhicule, ou une microturbine.

11. Dispositif de compression selon la revendication 10, dans lequel ladite machine électrique est agencée dans l'admission du gaz dudit turbocompresseur.

12. Dispositif de compression selon l'une des revendication 10 ou 11, dans lequel ladite machine électrique est une machine à grille statorique.

13. Procédé de fabrication d'un dispositif de compression entraîné par une machine électrique selon l'une des revendications précédentes, **caractérisé en ce qu'**on met en oeuvre les étapes suivantes :
a) on monte la roue de compression (2) sur l'arbre de compression (3) ;
b) on monte un aimant cylindrique (34) sur au moins une partie d'un arbre de rotor (31) ;
c) on retient ledit aimant cylindrique (34) sur ledit arbre de rotor (31) au moyen d'une frette amagnétique (33) ; et
d) on insère une extrémité dudit arbre de compression (3) dans un alésage (36) dudit arbre de rotor (31), et on fixe ledit arbre de compression (3) avec ledit arbre de rotor (31).
e) on fixe ledit arbre de rotor (31) avec ledit arbre de compression (3) par filetage (8) et on fait tourner ledit rotor (1) au moyen d'un embout de manipulation (5).

14. Procédé de fabrication selon la revendication 13, dans lequel lors de l'étape d'insertion de l'arbre de compression (3) dans ledit alésage (36) dudit arbre de rotor (31), ledit rotor (1) vient en butée sur ladite roue de compression (2) au moyen de surfaces planes (6) en contact.

15. Procédé de fabrication selon l'une des revendications 13 à 14, dans lequel lors de l'étape d'insertion de l'arbre de compression dans ledit alésage (36) dudit arbre de rotor (31), une portion cylindrique (7) dudit rotor (1) est insérée dans ladite roue de compression (2).

## Patentansprüche

1. Kompressionsvorrichtung für ein Fluid, welche von einer elektrischen Maschine angetrieben wird, wobei die elektrische Maschine einen Rotor (1) und einen Stator umfasst und wobei die Kompressionsvorrichtung eine Kompressionswelle (3) umfasst, auf welcher mindestens ein Kompressionsrad (2) angebracht ist, wobei der Rotor (1) mit der Kompressionswelle (3) fest verbunden ist, wobei der Rotor (1) eine Rotorwelle (31), einen zylindrischen Magneten (34), der auf wenigstens einem Teil der Rotorwelle (31) angebracht ist, und einen Schrumpfring (33) aus nichtmagnetischem Material zum Halten des Magneten (34) auf der Rotorwelle (31) umfasst, wobei die Rotorwelle (31) eine Bohrung (36) zum Einsetzen eines Endes der Kompressionswelle (3) aufweist, wobei der Rotor (1) mindestens einen nichtmagnetischen Anschlag (32) auf einer Seite des Magneten (34) aufweist, wobei der nichtmagnetische Anschlag (32) die Form eines Ringes aufweist, der zwischen einer Schulter der Rotorwelle (31) und dem zylindrischen Magneten (34) eingefügt ist, **dadurch gekennzeichnet, dass** der Rotor (1) mit der Kompressionswelle (3) mittels eines Gewindes (8) fest verbunden ist, und dadurch, dass der Rotor (1) ein Betätigungsendstück (5) zum Bewegen des Rotors (1) aufweist.

2. Kompressionsvorrichtung nach Anspruch 1, wobei der Rotor (1) einen Außendurchmesser aufweist, der kleiner oder gleich dem Durchmesser des Einlasses des Kompressionsrades ist.

3. Kompressionsvorrichtung nach einem der vorhergehenden Ansprüche, wobei der Schrumpfring (33) aus Titan oder aus Kohlenstoff hergestellt ist.

4. Kompressionsvorrichtung nach einem der vorhergehenden Ansprüche, wobei der Rotor (1) einen Abschnitt mit einem im Vergleich zu dem für die feste Verbindung mit der Kompressionswelle (3) bestimmten Ende verringerten Durchmesser (35) aufweist und wobei der Magnet (34) auf dem Abschnitt mit verringertem Durchmesser (35) angebracht ist.

5. Kompressionsvorrichtung nach einem der vorhergehenden Ansprüche, wobei der Rotor (1) eine ebene Fläche (6) aufweist, die sich in Kontakt mit einer ebenen Endfläche des Kompressionsrades (2) befindet.

6. Kompressionsvorrichtung nach einem der vorhergehenden Ansprüche, wobei der Rotor (1) einen zylindrischen Abschnitt (7) aufweist, der in das Kompressionsrad (2) eingesetzt ist.

7. Kompressionsvorrichtung nach Anspruch 6, wobei der zylindrische Abschnitt (7) des Rotors (1) eine axiale Länge aufweist, die im Wesentlichen mindestens gleich dem 1,5-Fachen des Durchmessers der Kompressionswelle (3) ist.

8. Kompressionsvorrichtung nach Anspruch 6, wobei die Kompressionsvorrichtung eine rohrförmige Hülse (9) umfasst, die auf der Kompressionswelle (3) angebracht ist und zwischen einem Ende des Kompressionsrades (2) und dem zylindrischen Abschnitt (7) des Rotors (1) angeordnet ist.

9. Kompressionsvorrichtung nach einem der vorhergehenden Ansprüche, wobei das Betätigungsendstück (5) demontierbar ist.

10. Kompressionsvorrichtung nach einem der vorhergehenden Ansprüche, wobei die Kompressionsvorrichtung ein Turbolader ist, der Turbine und Verdichter vereinigt, insbesondere für eine Brennkraftmaschine eines Fahrzeugs, oder eine Mikroturbine.

11. Kompressionsvorrichtung nach Anspruch 10, wobei die elektrische Maschine im Einlass des Gases des Turboladers angeordnet ist.

12. Kompressionsvorrichtung nach einem der Ansprüche 10 oder 11, wobei die elektrische Maschine eine Maschine mit Statorgitter ist.

13. Verfahren zur Herstellung einer von einer elektrischen Maschine angetriebenen Kompressionsvorrichtung nach einem der vorhergehenden Ansprüche, **dadurch gekennzeichnet, dass** die folgenden Schritte durchgeführt werden:
a) Das Kompressionsrad (2) wird auf der Kompressionswelle (3) angebracht;
b) ein zylindrischer Magnet (34) wird auf wenigstens einem Teil der Rotorwelle (31) angebracht;
c) der zylindrische Magnet (34) wird mittels eines nichtmagnetischen Schrumpfringes (33) auf der Rotorwelle (31) gehalten;
d) ein Ende der Kompressionswelle (3) wird in eine Bohrung (36) der Rotorwelle (31) eingesetzt, und die Kompressionswelle (3) wird mit der Rotorwelle (31) fest verbunden; und
e) die Rotorwelle (31) wird mit der Kompressionswelle (3) durch ein Gewinde (8) fest verbunden, und der Rotor (1) wird mittels eines Betätigungsendstücks (5) gedreht.

14. Verfahren zur Herstellung nach Anspruch 13, wobei im Schritt des Einsetzens der Kompressionswelle (3) in die Bohrung (36) der Rotorwelle (31) der Rotor (1) an dem Kompressionsrad (2) mittels in Kontakt befindlicher ebener Flächen (6) zur Anlage kommt.

15. Verfahren zur Herstellung nach einem der Ansprüche 13 bis 14, wobei im Schritt des Einsetzens der Kompressionswelle (3) in die Bohrung (36) der Rotorwelle (31) ein zylindrischer Abschnitt (7) des Rotors (1) in das Kompressionsrad (2) eingesetzt wird.

## Claims

1. Fluid compression device driven by an electric machine, said electric machine comprising a rotor (1) and a stator, and said compression device comprising a compression shaft (3) on which is mounted at least one compression wheel (2), said rotor (1) being secured with said compression shaft (3), said rotor (1) comprising a rotor shaft (31), a cylindrical magnet (34) mounted on at least one part of said rotor shaft (31), a ferrule (33) made of non-magnetic material for retaining said magnet (34) on said rotor shaft (31), said rotor shaft (31) comprising a bore (36) for the insertion of one end of said compression shaft (3), said rotor (1) comprising at least one non-magnetic stop (32) on one side of said magnet (34), the non-magnetic stop (32) being in the form of a ring inserted between a shoulder of the rotor shaft (31) and the cylindrical magnet (34), **characterized in that** said rotor (1) is secured with said compression shaft (3) by means of a thread (8) and **in that** said rotor (1) comprises a handling end piece (5) for moving said rotor (1).

2. Compression device according to Claim 1, in which said rotor (1) has an outer diameter that is smaller than or equal to the diameter of the inlet of said compression wheel.

3. Compression device according to either of the preceding claims, in which said ferrule (33) is made of titanium or carbon.

4. Compression device according to one of the preceding claims, in which said rotor (1) comprises a portion (35) of reduced diameter compared to the end intended to be secured with said compression shaft (3), and in which said magnet (34) is mounted on said reduced-diameter portion (35).

5. Compression device according to one of the preceding claims, in which said rotor (1) comprises a planar surface (6) in contact with a planar end surface of said compression wheel (2).

6. Compression device according to one of the preceding claims, in which said rotor (1) comprises a cylindrical portion (7) inserted into said compression wheel (2).

7. Compression device according to Claim 6, in which said cylindrical portion (7) of said rotor (1) has an axial length substantially equal to at least 1.5 times the diameter of the compression shaft (3).

8. Compression device according to Claim 6, in which said compression device comprises a tubular sleeve (9) mounted on said compression shaft (3) and arranged between one end of said compression wheel (2) and said cylindrical portion (7) of said rotor (1).

9. Compression device according to one of the preceding claims, in which said handling end piece (5) is removable.

10. Compression device according to one of the preceding claims, in which said compression device is a turbocompressor that brings together a turbine and a compressor, in particular for an internal combustion engine of a vehicle, or a micro-turbine.

11. Compression device according to Claim 10, in which said electric machine is arranged in the gas intake of said turbocompressor.

12. Compression device according to either of Claims 10 and 11, in which said electric machine is a machine having a stator grating.

13. Method for manufacturing a compression device driven by an electric machine according to one of the preceding claims, **characterized in that** the following steps are carried out:
a) mounting the compression wheel (2) on the compression shaft (3);
b) mounting a cylindrical magnet (34) on at least one part of a rotor shaft (31);
c) retaining said cylindrical magnet (34) on said rotor shaft (31) by means of a non-magnetic ferrule (33); and
d) inserting one end of said compression shaft (3) into a bore (36) of said rotor shaft (31), and securing said compression shaft (3) with said rotor shaft (31)
e) securing said rotor shaft (31) with said compression shaft (3) by threading (8) and making said rotor (1) rotate by means of a handling end piece (5).

14. Manufacturing method according to Claim 13, in which, during the step of inserting the compression shaft (3) into said bore (36) of said rotor shaft (31), said rotor (1) comes to abut against said compression wheel (2) by means of contacting planar surfaces (6).

15. Manufacturing method according to either of Claims 13 and 14, in which, during the step of inserting the compression shaft into said bore (36) of said rotor shaft (31), a cylindrical portion (7) of said rotor (1) is inserted into said compression wheel (2).
